# EUROPÄISCHE PATENTSCHRIFT

(11) **EP 2 662 180 B1**
(45) Veröffentlichungstag und Bekanntmachung des Hinweises auf die Patenterteilung: **27.12.2017**
(21) Anmeldenummer: 13166823.8
(22) Anmeldetag: 07.05.2013
(51) Int. Cl.: B23K 37/047, B62D 65/18

(54) **Speichereinheit für Trägersysteme**
Storage unit for conveying systems
Moyens de stockage pour systèmes de transport

(30) Priorität: 09.05.2012 DE 102012009063
(43) Veröffentlichungstag der Anmeldung: 13.11.2013
(73) Patentinhaber: ThyssenKrupp System Engineering GmbH, 74076 Heilbronn (DE)
(72) Erfinder: Neubert, Janko, 09337 Hohenstein-Ernstthal (DE); Richter, Thomas, 09113 Chemnitz (DE); Pätz, Roy, 08112 Wilkau Haßlau / OT Silberstraße (DE)
(74) Vertreter: Loock, Jan Pieter

(56) Entgegenhaltungen:
- EP-A1- 2 279 929
- DE-U1-202008 006 717
- GB-A- 2 304 649
- JP-A- S5 923 781

## Beschreibung

### Stand der Technik

Die vorliegende Erfindung geht aus von einer Speichereinheit für Trägersysteme, insbesondere für Spannrahmenmodule zur Bearbeitung von Fahrzeugkarosserien nach dem Oberbegriff des Anspruchs 1.

Es ist aus dem Stand der Technik allgemein bekannt, als Spannrahmenmodule ausgebildete Trägersysteme, welche zum Bearbeitungen von Fahrzeugkarosserien in entsprechenden Förderlinien Verwendung finden können, während einer zwischenzeitlichen Nichtverwendung in Parkstationen zu parken bzw. zu speichern. Beispielsweise ist aus der Druckschrift EP 1 611 991 B1 ein System zum Verschweißen von Fahrzeugkarosserien bekannt, welches eine Schweißstation zum Schweißen der Karosserien und eine Förderlinie zum Fördern von Karosserien durch die Schweißstation aufweist. Zum Positionieren der Karosserien werden Montage- bzw. Spannrahmen verwendet. Die Spannrahmen sind auf den zu schweißenden Karosserietyp jeweils individuell angepasst und umfassen entsprechende Einstell- und Verriegelungseinrichtungen zum Halten und Verriegeln der in die Schweißstation einfahrenden und noch ungeschweißten Karosserien in einer gewünschten Schweißposition. Um in dem System verschiedene Karosserietypen bearbeiten zu können, ist die Schweißstation mit verschiedenen Spannrahmen zu bestücken. Die Spannrahmen sind hierfür zwischen einer Arbeitsstellungen, in welcher sich der Spannrahmen innerhalb der Schweißstation in Verwendung befindet, und einer Parkstellung, wenn der Spannrahmen gerade nicht benötigt wird, wobei der Spannrahmen während der Parkstellung in einer Parkstation geparkt ist. Wenn nun in der Förderlinie eine Karosserie in die Schweißstation gefördert wird, welche einen anderen Spannrahmen erfordert, wird der aktuell in der Schweißstation befindliche Spannrahmen in die Parkstellung verfahren und der für die betreffende Karosserie passende Spannrahmen aus der Parkstellung in die Arbeitsstellung verfahren. Die Spannrahmen werden hier in Bodenschienen verschiebbar geführt.

### Offenbarung der Erfindung

Es ist eine Aufgabe der vorliegenden Erfindung, eine Speichereinheit für Trägersysteme zur Verfügung zu stellen, welche im Vergleich zum Stand der Technik bauraumkompakter, kostengünstiger, einfacher aufgebaut und modular veränderbar ist und gleichzeitig eine schnellere Arbeitsweise ermöglicht.

Gelöst wird diese Aufgabe mit einer Speichereinheit für Trägersysteme, insbesondere Spannrahmenmodule zur Bearbeitung von Fahrzeugkarosserien, welche eine erste Speicherschiene und eine zweite Speicherschiene jeweils zur Aufnahme von Spannrahmenmodulen aufweist, wobei die erste und die zweite Speicherschiene parallel zu einer gemeinsamen Haupterstreckungsrichtung angeordnet sind und wobei die erste und die zweite Speicherschiene entlang einer zur Haupterstreckungsrichtung senkrechten Querrichtung mittels eines gemeinsamen Motors bewegbar sind. Die erste und die zweite Speicherschiene werden über den Motor insbesondere gemeinsam angetrieben, so dass die erste und zweite Speicherschiene nicht nur einen gemeinsamen Motor, sondern auch einen gemeinsamen Antrieb aufweisen und somit miteinander zwangsgekoppelt sind.

In vorteilhafter Weise weist die Speichereinheit eine Mehrzahl von Speicherschienen auf, welche senkrecht zur axialen Erstreckung der Speicherschienen mit einem gemeinsamen Motor bewegbar sind, so dass im Unterschied zum Stand der Technik neben den Speicherschienen zum Aufnehmen von gespeicherten bzw. geparkten Trägersystemen keine separate Transporteinheit zum Transportieren der Trägersysteme senkrecht zur Haupterstreckungsrichtung benötigt wird. Gleichzeitig wird nur ein einziger Motor benötigt, um verschiedene Speicherschienen wahlweise in eine Belade- bzw. Entladeposition zu verfahren. Vorteilhafterweise dienen bei der erfindungsgemäßen Speichereinheit die beweglichen Speicherschienen selbst als Speicherorte für die Trägersysteme. Die Trägersysteme können beispielsweise Spannrahmenmodule zur Bearbeitung von Kraftfahrzeugkarosserie in einer Bearbeitungsstation einer Förderlinie umfassen. Durch die Einsparung der zusätzlichen Transporteinheit kann die Speichereinheit im Vergleich zum Stand der Technik die Spannrahmenmodule schneller an die Bearbeitungsstation abgeben oder von der Bearbeitungsstation aufnehmen, da ein zusätzlicher Übergabe- und Transportschritt eingespart wird. Hierdurch werden ferner die Herstellungskosten gesenkt und weniger Bauraum benötigt. Vorzugsweise umfassen die erste und zweite Speicherschiene Oberschienen, an welchen die Spannrahmenmodule hängend befestigt sind. Die Spannrahmenmodule sind dann aufgrund ihres Eigengewichts stets vertikal ausgerichtet. Alternativ wäre aber auch denkbar, dass die Speicherschienen auf den Boden verlaufende Bodenschienen umfassen. Die Speichereinheit weist insbesondere eine Überführungsschiene auf, welche parallel zur Haupterstreckungsrichtung ausgerichtet ist, wobei wahlweise die erste Speicherschiene, die zweite Speicherschiene und/oder eine Zentralschiene der Speichereinheit durch eine mittels des Motors angetriebene Bewegung entlang der Querrichtung in eine mit der Überführungsschiene fluchtende Ausrichtung (auch als Belade- bzw. Entladeposition bezeichnet) bringbar ist. Ferner ist vorzugsweise die Arbeitsschiene entlang der Querrichtung bewegbar, so dass die Überführungsschiene auf einer den Speicherschienen abgewandten Seite mit der Arbeitsschiene in Flucht gebracht werden kann. Auf diese Weise kann die erste Speicherschiene, die zweite Speicherschiene und die Zentralschiene nacheinander mit einem Spannrahmenmodule von der Arbeitsschiene beladen oder entladen werden. Das Spannrahmenmodul wird über die Überführungsschiene auf die oder von der mit der Überführungsschiene gerade fluchtende Arbeitsschiene, Austauschschiene, Speicherschiene oder Zentralschiene verfahren. Eine entsprechende Steuerung des Motors sorgt dafür, dass die gewünschte Schiene mit der Überführungsschiene fluchtet. Die Speichereinheit ist insbesondere derart ausgebildet, dass die Spannrahmenmodule entlang einer zur Haupterstreckungsrichtung und insbesondere zu einer Haupterstreckungsebene der Spannrahmenmodule senkrechten Querrichtung in Richtung einer Förderlinie in eine Bearbeitungsstation einer Bearbeitungsanlage eingefahren und aus der Bearbeitungsstation herausgefahren werden können. Das Ein - und Ausfahren der Spannrahmenmodule erfolgt vorzugsweise mittels einer zur Haupterstreckungsrichtung parallelen Arbeitsschiene, welche parallel und antiparallel zur Querrichtung bewegbar ist.

Gemäß einer weiteren bevorzugten Ausführungsform der vorliegenden Erfindung ist vorgesehen, dass die Speichereinheit eine mit dem Motor wirkverbundene Getriebeeinheit aufweist, wobei die erste Speicherschiene über eine erste Zahnstange mit der Getriebeeinheit gekoppelt ist und wobei die zweite Speicherschiene über eine zweite Zahnstange mit der Getriebeeinheit gekoppelt ist. Die Getriebeeinheit umfasst vorzugsweise ein mit einer Antriebswelle des Motors drehfest verbundenes Antriebsritzel, welches sowohl in die erste Zahnstange, als auch in die zweite Zahnstange formschlüssig eingreift. In vorteilhafter Weise wird die erste Speicherschiene über die erste Zahnstange und die zweite Speicherschiene über die zweite Zahnstange angetrieben. Hierdurch wird eine vergleichsweise zuverlässige und kompakte Kopplung zwischen dem Motor und beiden Speicherschienen ermöglicht, welche zudem unabhängig von einem sich während der Bewegung der Speicherschienen gegebenenfalls verändernden Abstand zwischen den Speicherschienen entlang der Querrichtung arbeitet.

Gemäß einer weiteren bevorzugten Ausführungsform der vorliegenden Erfindung ist vorgesehen, dass die Speichereinheit eine Zentralschiene aufweist, welche entlang der Querrichtung zwischen der ersten und der zweiten Speicherschiene angeordnet ist und welche parallel zur Haupterstreckungsrichtung ausgerichtet ist. In vorteilhafter Weise kann die Zentralschiene als dritte Speicherschiene verwendet werden, so dass in der Speichereinheit bis zu drei Spannrahmenmodule geparkt bzw. gespeichert werden können. Alternativ ist denkbar, dass die Zentralschiene als Rangierschiene verwendet wird, welche beispielsweise eine Übergabe von Spannrahmenmodule an weitere Speichereinheiten ermöglicht. Hierfür weist die Speichreinheit vorzugsweise eine weitere Überführungsschiene auf, welche auf einer der Überführungsschiene entlang der Haupterstreckungsrichtung gegenüberliegenden Seite der Zentralschiene angeordnet ist. Auf diese Weise ist eine modulare Erweiterung der Speichereinheit in einfacher Weise möglich, wenn, beispielsweise aufgrund einer Umstellung der Förderlinie, zusätzliche Speicherplätze notwendig werden. Ferner kann die als Rangierschiene fungierende Zentralschiene zum Umsortieren der Spannrahmenmodule innerhalb der Speichereinheit oder zwischen verschiedenen Speichereinheiten verwendet werden. Die erste Speicherschiene, die zweite Speicherschiene und die Zentralschiene werden über den Motor insbesondere gemeinsam angetrieben, so dass die erste Speicherschiene, die zweite Speicherschiene und die Zentralschiene nicht nur einen gemeinsamen Motor, sondern auch einen gemeinsamen Antrieb aufweisen und somit miteinander zwangsgekoppelt sind.

Gemäß einer weiteren bevorzugten Ausführungsform der vorliegenden Erfindung ist vorgesehen, dass der Motor und die Getriebeeinheit an der Zentralschiene befestigt sind, wobei sich die Antriebswelle parallel zur Haupterstreckungsrichtung erstreckt und wobei die erste und die zweite Zahnstange sich parallel zur Querrichtung erstrecken. In vorteilhafter Weise ist der Motor somit auf der bewegbaren Zentralschiene angeordnet. Dies hat den Vorteil, dass sich die Schienen im Antriebsfall, insbesondere die erste Speicherschiene und die Zentralschiene oder die zweite Speicherschienen und die Zentralschiene, mit unterschiedlichen Geschwindigkeiten in Querrichtung bewegen, obwohl der Motor mit einer konstanten Geschwindigkeit arbeitet. Die Getriebeeinheit sorgt für eine entsprechende Übersetzung der Antriebsbewegung, ohne dass aufwändige Zahnradübersetzungen mit unterschiedlich großen Ritzeln oder dergleichen benötigt werden. Der Aufbau der Getriebeeinheit, in Kombination mit dem zentral angeordneten Motor und dessen als Synchronwelle arbeitenden Antriebswelle, realisiert ein wechselseitig fluchtendes Einspuren der ersten Speicherschiene, der zweiten Speicherschiene oder der Zentralschiene in die Überführungsschiene. Vorzugsweise umfasst die Speichereinheit wenigstens zwei sich parallel zur Querrichtung erstreckende Laufschienen, wobei die erste Speicherschiene, die zweite Speicherschiene und die Zentralschiene entlang der Querrichtung beweglich auf den zwei Laufschienen gelagert sind.

Gemäß einer weiteren bevorzugten Ausführungsform der vorliegenden Erfindung ist vorgesehen, dass die Speichereinheit eine erste Fixiervorrichtung zur lösbaren Fixierung der Position der ersten Speicherschiene aufweist und/oder wobei die Speichereinheit eine zweite Fixiervorrichtung zur lösbaren Fixierung der Position der zweiten Speicherschiene aufweist.

Auf diese Weise kann wahlweise die erste Speicherschiene fixiert werden, so dass eine Antriebsbewegung des Motors zu einer ersten Bewegung der Zentralschiene und zu einer zweiten Bewegung der zweiten Speicherschiene jeweils relativ zur ersten Speicherschiene führen. Da das Antriebsritzel auf der Zentralschiene angeordnet ist und die Zentralschiene gemäß der ersten Bewegung bewegt wird, bewegt die zweite Speicherschiene sich mit der doppelten Geschwindigkeit. Die zweite Bewegung ist demnach doppelt so schnell wie die erste Bewegung. Die Antriebsbewegung führt somit nicht nur zu einer Abstandsänderung zwischen der fixierten ersten Speicherschiene und der Zentralschiene, sondern auch zu einer Abstandsänderung zwischen der zweiten Speicherschiene und der Zentralschiene. Vorteilhafterweise kann somit entweder die zweite Speicherschiene oder die Zentralschiene vergleichsweise zügig in die Lade- bzw. Entladeposition gebracht werden. Wenn die erste Speicherschiene in die Lade- bzw. Entladeposition gebracht werden soll, wird die zweite Speicherschiene mittels der zweiten Fixiervorrichtung fixiert, so dass analog die Zentralschiene und die erste Speicherschiene entlang der Querrichtung mit unterschiedlichen Geschwindigkeiten relativ zur Überführungsschiene bewegbar sind. Die erste Fixiervorrichtung umfasst vorzugsweise ein Fixierelement zur lösbaren Fixierung der ersten Fixiervorrichtung gegenüber der ersten und/oder zweiten Laufschiene, während die zweite Fixiervorrichtung vorzugsweise ein Fixierelement zur lösbaren Fixierung der zweiten Fixiervorrichtung gegenüber der ersten und/oder zweiten Laufschiene umfasst. Die Fixierelemente umfassen vorzugsweise jeweils ein Spannhebelelement.

Gemäß einer weiteren bevorzugten Ausführungsform der vorliegenden Erfindung ist vorgesehen, dass die erste Speicherschiene, die zweite Speicherschiene und/oder die Zentralschiene jeweils an einer Stirnseite ein Führungsmittel aufweist, wobei die Überführungsschiene an einer korrespondierenden Stirnseite ein entsprechendes Gegenführungsmittel aufweist, wobei das Führungsmittel Rollen und das Gegenführungsmittel ein entlang der Querrichtung zwischen die Rollen einführbares Führungselement aufweist oder wobei das Gegenführungsmittel Rollen und das Führungsmittel ein entlang der Querrichtung zwischen die Rollen einführbares Führungselement aufweist. In vorteilhafter Weise wird somit eine zuverlässige Positionierung und Ausrichtung der Schienen relativ zueinander möglich, so dass eine miteinander fluchtende Ausrichtung der Schienen und somit ein reibungsloses Bewegen der Spannrahmenmodule über die Schnittstellen der Schienen erzielt wird. Ferner wird verhindert, dass sich die Schienen beim Überführen eines Spannrahmenmoduls entlang der Haupterstreckungsrichtung voneinander beabstanden. Die Spannrahmenmodule werden vorzugsweise mit als Laufkatzen ausgebildeten Transporteinheiten in Längsrichtung auf den Schienen verschoben, wobei die Transporteinheiten einen eigenen Antrieb aufweisen und mit den Spannrahmenmodulen lösbar zu koppeln sind. Die Spannrahmenmodule umfassen vorzugsweise die eigentlichen Spannrahmen und Halterungen, an welchen die Spannrahmen hängen, wobei die Halterungen als auf den Schienen verschiebbar gelagerte Laufkatzen ausgebildet sind.

Die Spannrahmen umfassen insbesondere Bearbeitungsrahmen zur Bearbeitung von Fahrzeugkarosserien, welche mittels der Transporteinheit in eine Bearbeitungsstation, welche insbesondere in eine Förderlinie für Fahrzeuge integriert ist, verfahrbar sind. Vorzugsweise sind die Spannrahmen auf den zu bearbeitenden Karosserietyp jeweils individuell angepasst und umfassen entsprechende Einstell- und Verriegelungseinrichtungen zum Halten und Verriegeln der in die Bearbeitungsstation einfahrenden Karosserien in der richtigen Position. Die Bearbeitungsstation umfasst vorzugsweise eine Schweißstation, welche zusätzlich Schweißroboter zum Verschweißen der Karosserien aufweist. Die erste Speicherschiene, die zweite Speicherschiene, die Zentralschiene, die Überführungsschiene, die Arbeitsschiene und/oder die Austauschschiene sind vorzugsweise als Doppel-I-Träger mit integrierten Hohlkastenprofil ausgebildet, damit die Schienen möglichst stabil und torsionssteif sind.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Gesamtansicht von in eine Bearbeitungsanlage integrierten Speichereinheiten gemäß einer beispielhaften Ausführungsform der vorliegenden Erfindung.
- **Figuren 2a und 2b**: zeigen Detailansichten der in Figur 1 gezeigten und in unterschiedlichen Zuständen befindlichen Speichereinheiten gemäß der beispielhaften Ausführungsform der vorliegenden Erfindung.
- **Figuren 3a, 3b und 3c**: zeigen Detailansichten der in unterschiedlichen Zuständen befindlichen und nicht mit Speichermodulen bestückten Speichereinheit gemäß der beispielhaften Ausführungsform der vorliegenden Erfindung.
- **Figuren 4a und 4b**: zeigen Detailansichten der Getriebeeinheit, der Zahnstangen und des Motors der Speichereinheit gemäß der beispielhaften Ausführungsform der vorliegenden Erfindung.
- **Figur 5**: zeigen Detailansichten der Führungs- und Gegenführungsmittel der Speichereinheit gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

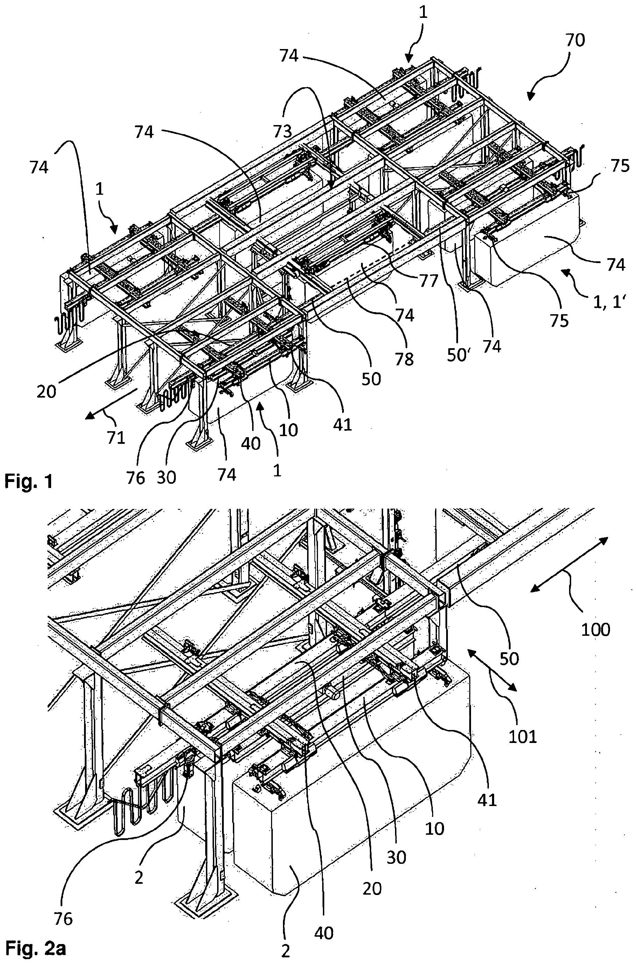

In **Figur 1** ist eine schematische Gesamtansicht einer Bearbeitungsanlage 70 und vier Speichereinheiten 1 jeweils gemäß einer beispielhaften ersten Ausführungsform der vorliegenden Erfindung dargestellt.

Die Bearbeitungsanlage 70 umfasst eine Förderlinie 71 zur Förderung von Fahrzeugkarosserien (nicht dargestellt). Die Fahrzeugkarosserien werden entlang der Förderlinie 71 mittels nicht näher dargestellter Fördermittel durch eine Bearbeitungsstation 73 transportiert. Die Bearbeitungsstation 73 dient zur Bearbeitung der Fahrzeugkarosserien. Im vorliegenden Beispiel umfasst die Bearbeitungsstation 73 eine Schweißstation. In der Scheißstation werden die nur vorgefügten Fahrzeugkarosserien verschweißt. Zur Ausrichtung und Halterung der gerade in der Bearbeitungsstation 73 befindlichen Fahrzeugkarosserie während des Schweißvorgangs finden Spannrahmen 74 (in den Figuren nur schematisch angedeutet) Verwendung, die individuell auf das Design und die Geometrie der zu schweißenden Fahrzeugkarosserien angepasst sind. Die Spannrahmen 74 sind dabei mit einer Vielzahl von Komponenten versehen. In der Bearbeitungsstation 73 werden von jeder Seite ein Spannrahmen 74 seitlich der Fahrzeugkarosserie angeordnet und mittels eines entsprechenden Transportsystems senkrecht zur Förderlinie 71 derart auf die Fahrzeugkarosserie zubewegt, dass die beiden Spannrahmen 74 oder die auf den Spannrahmen 74 angeordneten Werkzeuge in Eingriff mit der Fahrzeugkarosserie gelangen. In diesem Zustand werden nun Bearbeitungswerkzeuge (nicht dargestellt) zum Bearbeiten der fixierten Fahrzeugkarosserie beispielsweise über Bodenschienen an die fixierte Fahrzeugkarosserie herangefahren, um die Fahrzeugkarosserie zu bearbeiten. Im vorliegenden Beispiel umfassen die Bearbeitungswerkzeuge Schweißroboter, welche die Fahrzeugkarosserie zusammenschweißen. Nach dem Verschweißen werden die Bearbeitungswerkzeuge zurückgefahren und die Fixierung der Fahrzeugkarosserie aufgehoben, so dass die geschweißte Fahrzeugkarosserie die Bearbeitungsstation entlang der Förderlinie 71 wieder verlassen kann und eine neue, noch nicht mit der Bearbeitungsstation 73 bearbeitete Fahrzeugkarosserie in die Bearbeitungsstation 73 gefahren werden kann.

Die Spannrahmen 74 sind jeweils individuell an den Karosserietyp angepasst. Um verschiedene Karosserietypen durch die Förderlinie 71 zu fördern und mit der Bearbeitungsstation 73 bearbeiten zu lassen, werden daher verschieden ausgebildete Spannrahmen 74 benötigt, mit welchen die Bearbeitungsstation 73 je nach Bedarf automatisch bestückt werden kann. Die Bearbeitungsanlage 70 weist hierfür ein Speichersystem mit den vier Speichereinheiten 1 auf, in welchem nicht benötigte Spannrahmen 74 zeitweise abgelegt werden. Wenn ein Karosserietyp in die Bearbeitungsstation 73 gefahren wird, der einen anderen Spannrahmen 74 erfordert, wird der entsprechende Spannrahmen 74 aus einer der Speichereinheiten 1 in die Bearbeitungsstation 73 geladen. Die Spannrahmen 74 sind jeweils mittels Halterungen 75 beweglich an Hängeschienen aufgehängt. Im Sinne der vorliegenden Erfindung umfasst ein Spannrahmenmodul 2 jeweils einen Spannrahmen 74 nebst Halterungen 75. Ein solches Spannrahmenmodul 2 bildet im vorliegenden Beispiel ein Trägersystem. Mittels einer Transporteinheit 76 können die Spannrahmenmodule 2 entlang der Hängeschienen verschoben werden.

Eine jede Speichereinheit 1 umfasst eine erste Speicherschiene 10, eine zweite Speicherschiene 20 und eine zwischen der ersten und zweiten Speicherschiene 10, 20 angeordnete Zentralschiene 30. Die drei Schienen 10, 20, 30 sind dabei parallel zueinander und parallel zu einer Haupterstreckungsrichtung 100 ausgerichtet. Entlang einer zur Haupterstreckungsrichtung 100 senkrechten Richtung überlappen sich die Projektionen der drei Schienen 10, 20, 30 deckungsgleich. Die drei Schienen 10, 20, 30 sind an zwei Laufschienen 40, 41 aufgehängt, wobei die zwei Laufschienen 40, 41 parallel zur Querrichtung 101 ausgerichtet sind und entlang der Haupterstreckungsrichtung 100 voneinander beabstandet sind. Die erste Speicherschiene 10, die zweite Speicherschiene 20 und die Zentralschiene 30 sind in Querrichtung 101 verschiebbar an den zwei Laufschienen 40, 41 und können mittels eines Motors 3 in Querrichtung 101 verfahren werden. Ferner weist die Speichereinheit 1 jeweils eine feststehende und sich parallel zur Haupterstreckungsrichtung 100 erstreckende Überführungsschiene 50 auf. Die Überführungsschiene 50 ist entlang der Haupterstreckungsrichtung 100 gegenüber den Speicherschienen 10, 20 bzw. der Zentralschiene 30 versetzt angeordnet. Durch eine Bewegung der ersten Speicherschiene 10, der zweiten Speicherschiene 20 und der Zentralschiene 30 entlang der Querrichtung 101 mittels des Motors 3 kann wahlweise eine der drei Schienen 10, 20 30 in eine mit der Überführungsschiene 50 fluchtende Position gebracht werden. Diese Position wird auch als Lade- bzw. Entladeposition bezeichnet. Diejenige der drei Schienen 10, 20 30, die sich in der Lade- bzw. Entladeposition befindet, kann mit einem Spannrahmenmodul 2 beladen werden, indem das Spannrahmenmodul 2 von einer Arbeitsschiene 77 der Bearbeitungsstation 73 über die Überführungsschiene 50 auf die Schiene 10, 20, 30 mittels der Transporteinheit 76 verfahren wird. Umgekehrt kann ein Spannrahmenmodul 2, das an der in der Lade- bzw. Entladeposition befindlichen Schiene 10, 20, 30 befestigt ist, über die Überführungsschiene 50 in die Bearbeitungsstation 73 verfahren werden.

Denkbar ist, dass die erste Speicherschiene 10 und die zweite Speicherschiene 20 jeweils zum Speichern bzw. Parken eines von der Bearbeitungsstation 73 gerade nicht gebrauchten Spannrahmenmoduls 2 dient, während die Zentralschiene 30 nur als Rangierhilfe fungiert. So könnte beispielsweise ein zuvor in der Bearbeitungsstation 70 verwendetes Spannrahmenmodul 2 von der Arbeitsschiene 77 vorläufig auf die Zentralschiene 30 verfahren werden, damit ein anderes Spannrahmenmodul 2 aus einer entlang der Haupterstreckungsrichtung 100 gegenüberliegenden, anderen Speichereinheit 1' auf die Arbeitsschiene 77 verfahren werden kann. Die Arbeitsschiene 77 wird anschließend entlang der Querrichtung 101 in Richtung der Förderlinie 71 bewegt, um mit dem anderen Spannrahmenmodul 2 eine Karosserie zu bearbeiten. In diesem Zustand wird eine Austauschschiene 78 zwischen die beiden Überführungsschienen 50, 50' der beiden gegenüberliegenden Speichereinheiten 1, 1' verfahren, so dass das auf der Zentralschiene 30 nur vorläufig geparkte Spannrahmenmodul 2 über die Austauschschiene 78 an einen endgültigen Speicherort in der anderen Speichereinheit 1' gebracht werden kann. Auf diese Weise kann ein Umsortieren innerhalb der beiden Speichereinheiten 1, 1' durchgeführt werden, während die Bearbeitungsstation 73 eine Fahrzeugkarosserie bearbeitet. Alternativ könnte auf einer der Bearbeitungsstation 73 jeweils abgewandten Seite jeder Speichereinheit 1 eine weitere Speichereinheit (nicht abgebildet) angeordnet werden, wobei mittels der Zentralschiene 30 ein Spannrahmenmodul 2 von der Bearbeitungsstation 70 zu der weiteren Speichereinheit verfahren wird. Auf diese Weise könnte die Anzahl der verfügbaren Speicherplätze für die Bearbeitungsanlage 70 modular erweitert werden.

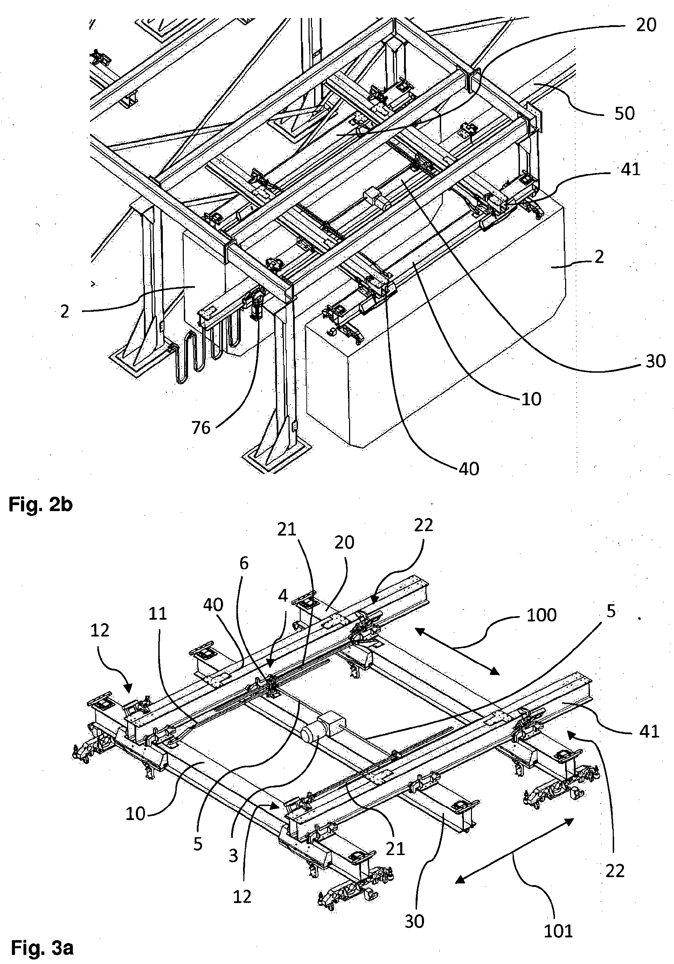

In **Figuren 2a** **und** **2b** ist eine der in Figur 1 illustrierten Speichereinheit 1 im Detail dargestellt. In Figur 2a sind die erste Speicherschiene 10 und die zweite Speicherschiene 20 jeweils mit einem Spannrahmenmödul 2 bestückt, während die Zentralschiene 30 nicht bestückt ist. Die drei Schienen 10, 20, 30 sind soweit in eine der Förderlinie 71 abgewandte Richtung entlang der Querrichtung 101 verfahren, dass die zweite Speicherschiene 20 in einer mit der Überführungsschiene 50 fluchtenden Position angeordnet ist. In dieser Lade- bzw. Entladeposition der zweiten Speicherschiene 20 könnte nun das an der zweiten Speicherschiene 20 hängende Spannrahmenmodul 2 mittels einer Transporteinheit 76 entlang der Haupterstreckungsrichtung 100 über die Überführungsschiene 50 auf die Arbeitsschiene 77 der Bearbeitungsstation 73 oder gegebenenfalls auf die Austauschschiene 78 verfahren werden. In Figur 2b sind die zweite Speicherschiene 20 und die Zentralschiene 30 gegenüber der Figur 2a in Richtung der Förderlinie 71 verschoben, so dass die Zentralschiene 30 in der Lade- zw. Entladeposition angeordnet ist.

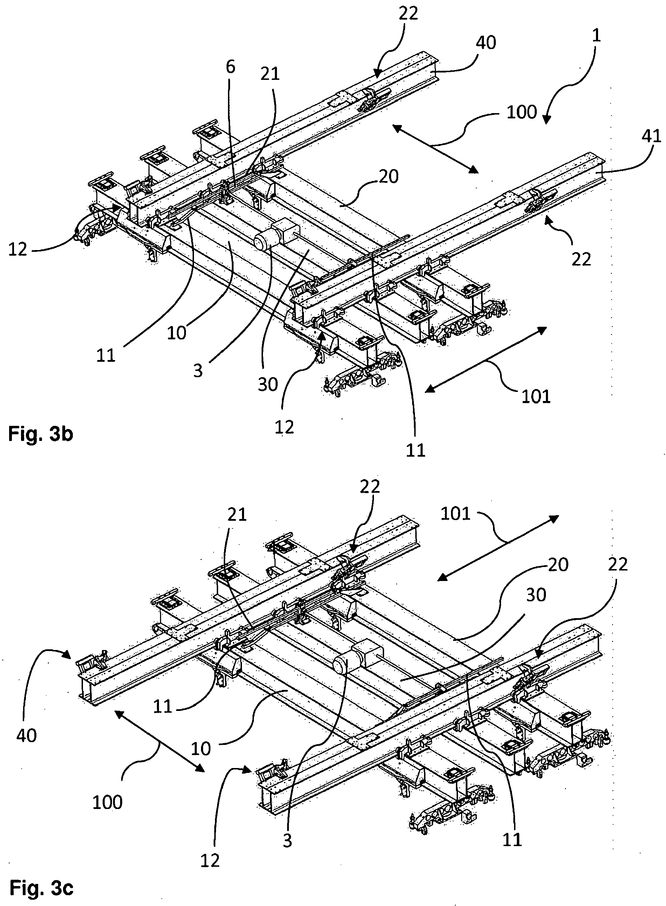

In **Figuren 3a****,** **3b und 3c** sind Detailansichten der in unterschiedlichen Zuständen befindlichen und nicht mit Speichermodulen 2 bestückten Speichereinheit 1 gemäß der beispielhaften Ausführungsform der vorliegenden Erfindung dargestellt, um die Bewegungen der Schienen 10, 20, 30 und den Antriebsmechanismus zu veranschaulichen. Der Motor 3 ist auf der Zentralschiene 30 fest montiert und auf jeder Seite entlang der Haupterstreckungsrichtung 100 über eine Antriebswelle 5 mit einem Antriebsritzel 6 gekoppelt. Auf einer ersten Seite des Antriebsritzels 6 steht das Antriebsritzel 6 jeweils mit einer ersten Zahnstange 11 in formschlüssigen Eingriff, deren eines Ende fest mit der ersten Speicherschiene 10 verbunden ist. Auf einer zweiten Seite des Antriebsritzels 6 steht das Antriebsritzel 6 jeweils mit einer zweiten Zahnstange 21 in formschlüssigen Eingriff, deren eines Ende mit der zweiten Speicherschiene 20 fest verbunden ist. Das Antriebsritzel 6 fungiert jeweils als Getriebeeinheit 4. Die Speichereinheit 1 umfasst ferner zwei erste Fixiervorrichtungen 12 in Form von ersten Spannhebelelementen, welche zur lösbaren Fixierung der Position der ersten Speicherschiene 10 an der ersten und zweiten Laufschiene 40, 41 vorgesehen sind. Analog weist die Speichereinheit 1 zwei zweite Fixiervorrichtungen 22 auf, welche ebenfalls jeweils als Spannhebelelemente ausgebildet sind und zur Fixierung der Position der zweiten Speicherschiene 20 an der ersten und zweiten Laufschiene 40, 41 dienen.

In Figur 3a sind die erste Speicherschiene 10, die Zentralschiene 30 und die zweite Speicherschiene 20 entlang der Querrichtung 101 maximal auseinander gefahren, d.h. die Abstande zwischen den drei Schienen 10, 30, 20 sind jeweils maximal. In dieser Position befindet sich die Zentralschiene 30 in einer mit der nicht dargestellten mittig angeordneten Überführungsschiene 50 fluchtenden und auf Stoß befindlichen Position. Mit anderen Worten: Die Zentralschiene 30 befindet sich in der Lade- bzw. Entladeposition. In der Figur 3b befindet sich hingegen die zweite Speicherschiene 20 in der mit der Überführungsschiene 50 fluchtenden Position, d.h. in der Lade- bzw. Entladeposition. Zur Überführung der zweiten Speicherschiene 20 in die Lade- bzw. Entladeposition, wurde die Position der ersten Speicherschiene 10 mittels der ersten Fixiervorrichtung 12 fixiert und anschließen der Motor 3 derart beschaltet, dass das Antriebsritzel 6 die Zentralschiene 30 über die erste Zahnstange 11 in Richtung der ersten Speicherschiene 10 verschiebt und die zweite Speicherschiene 20 in Richtung der ersten Speicherschiene 10 und in Richtung der Zentralschiene 30 verschiebt. Da das Antriebsritzel 6 sich mit der Zentralschiene 30 mitbewegt, wird das zweite Speicherschiene 20 mit der doppelten Geschwindigkeit bewegt. Die Abstände zwischen den drei Schiene 10, 20, 30 sind nun minimal und die zweite Speicherschiene 20 fluchtet mit der Überführungsschiene 50. In umgekehrter Weise kann die Zentralschiene 30 und die zweite Speicherschiene 20 wieder zurück in die in Figur 3a gezeigte Position verfahren werden, wenn die erste Fixiervorrichtung 12 die erste Speicherschiene 10 weiter fixiert und der Motor 3 in die entgegensetzte Richtung betrieben wird. Analog kann ausgehend von der in Figur 1 gezeigten Position auch die erste Speicherschiene 10 in die Lade- und Entladeposition verfahren werden (illustriert in Figur 3c), indem die Position der zweiten Speicherschiene 20 mittels der zweiten Fixiervorrichtung 22 fixiert wird, während die erste Speicherschiene 10 von der ersten Fixiervorrichtung 12 nicht fixiert wird. Die Zentralschiene 30 und die erste Speicherschiene 10 bewegen sich dann in Richtung der zweiten Speicherschiene 20, wobei die erste Speicherschiene 10 sich ferner in Richtung der Zentralschiene 30 bewegt. Die erste Speicherschiene 10 ist dann in einer mit der Überführungsschiene 50 fluchtenden Position und kann mit einem Spannrahmenmodul 2 beladen oder entladen werden.

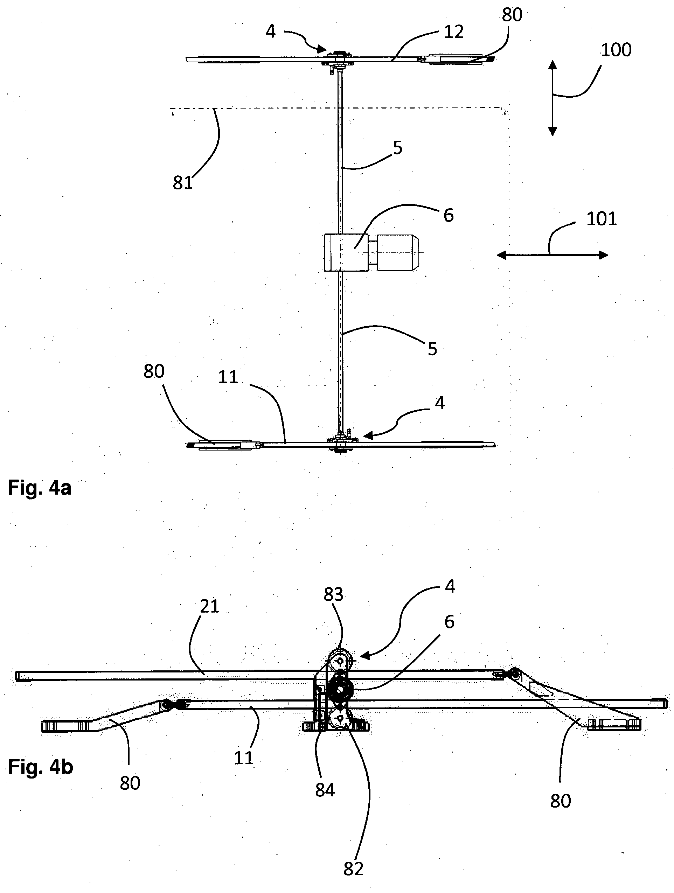

In **Figuren 4a und 4b** sind Detailansichten der Getriebeeinheit 4, der ersten und zweiten Zahnstangen 11, 21 und des Motors 3 der Speichereinheit 1 gemäß der beispielhaften Ausführungsform der vorliegenden Erfindung illustriert. Es ist zu sehen, dass beide Getriebeeinheiten 4 im Wesentlichen symmetrisch entlang der Haupterstreckungsrichtung 100 aufgebaut sind. Die einteilige Antriebswelle 5 arbeitet hier als Synchronwelle und garantiert den Gleichlauf der Speicherschienen 10, 20 und der Zentralschiene 30. Die ersten und zweiten Zahnstangen 11, 21 sind jeweils mittels Befestigungslaschen 80 an der ersten bzw. zweiten Speicherschiene 10, 20 (nicht eingezeichnet) befestigt. In Figur 4b ist eine Schnittbildansicht entlang der Schnittlinie 81 in Figur 4a dargestellt. Es ist zu sehen, dass jede Getriebeeinheit 4 eine erste und eine zweite Führungsrolle 82, 83 aufweist, wobei die erste Zahnstange 11 zwischen dem Antriebsritzel 6 und der ersten Führungsrolle 82 und die zweite Zahnstange 21 zwischen dem Antriebsritzel 6 und der zweiten Führungsrolle 83 angeordnet bzw. geführt sind. Das Antriebsritzel 6, die erste Führungsrolle 82 und die zweite Führungsrolle 83 werden von einem gemeinsamen Flansch 84 gehalten, der auf einer Oberseite der Zentralschiene 30 (nicht dargestellt) befestigt ist.

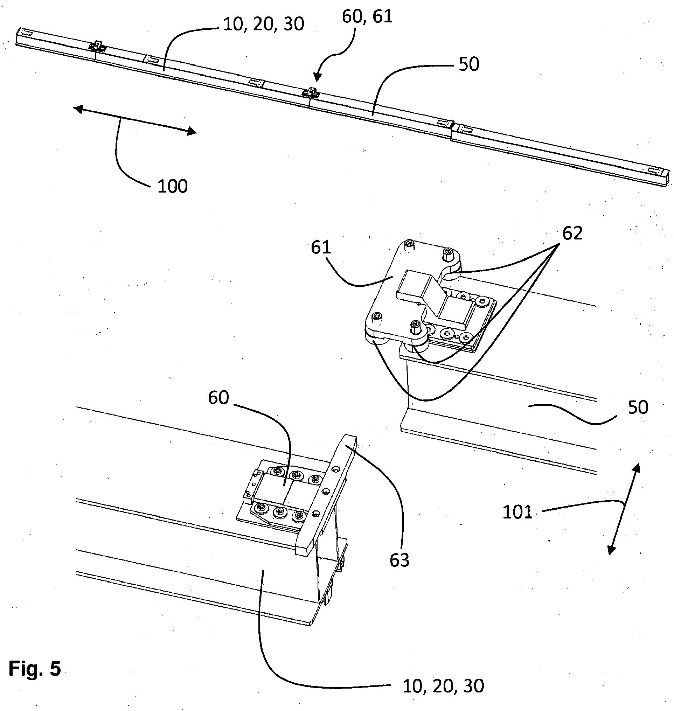

In **Figur 5** sind Führungs- und Gegenführungsmittel 60, 61 der Speichereinheit 1 gemäß der beispielhaften Ausführungsform der vorliegenden Erfindung dargestellt. Die erste Speicherschiene 10, die zweite Speicherschiene 20 und die Zentralschiene 30 weisen an derjenigen Stirnseite, der in der Lade- bzw. Entladeposition der Stirnseite der Überführungsschiene 50 zugewandt ist, jeweils ein Führungsmittel 60 auf, welches ein sich entlang der Querrichtung 101 stabförmig erstreckendes Führungselement 63 umfasst. Die Überführungsschiene 50 weist an ihrer Stirnseite ein korrespondierendes Gegenführungsmittel 61 auf, welches vier Rollen 62 umfasst. Wenn eine der ersten Speicherschiene 10, der zweiten Speicherschiene 20 oder der Zentralschiene30 sich entlang der Querrichtung 101 in die Lade- bzw. Entladeposition bewegt, wird das Führungselement 63 zwischen die Rollen 62 des Gegenführungselements 61 eingeführt, so dass eine Führung, Positionierung und Ausrichtung der in die Lade- bzw. Entladeposition überführten Schiene 10, 20, 30 erfolgt.

Die erste Speicherschiene 10, die zweite Speicherschiene 20, die Zentralschiene 30, die Überführungsschiene 50, die Arbeitsschiene 77 und die Austauschschiene 78 sind vorzugsweise als Doppel-I-Träger mit integrierten Hohlkastenprofil ausgebildet, um eine möglichst stabiles und torsionssteifes Profil zu Verfügung zu stellen. Für einen Fachmann versteht sich von selbst, dass jedes Speicherelement 1 auf mehrere erste und zweite Speicherschienen 10, 20 erweitert werden kann.

### BEZUGSZEICHENLISTE

- 1: Speichereinheit
- 2: Spannrahmenmodul
- 3: Motor
- 4: Getriebeeinheit
- 5: Antriebswelle
- 6: Antriebsritzel
- 10: Erste Speicherschiene
- 11: Erste Zahnstange
- 12: Erste Fixiervorrichtung
- 20: Zweite Speicherschiene
- 21: Zweite Zahnstange
- 22: Zweite Fixiervorrichtung
- 30: Zentralschiene
- 40, 41: Laufschiene
- 50: Überführungsschiene
- 60: Führungsmittel
- 61: Gegenführungsmittel
- 62: Rolle
- 63: Führungselement
- 70: Bearbeitungsanlage
- 71: Förderlinie
- 73: Bearbeitungsstation
- 74: Spannrahmen
- 75: Halterung
- 76: Transporteinheit
- 77: Arbeitsschiene
- 78: Austauschschiene
- 80: Befestigungslasche
- 81: Schnittlinie
- 82: Erste Führungsrolle
- 83: Zweite Führungsrolle
- 84: Flansch
- 100: Haupterstreckungsrichtung
- 101: Querrichtung

## Patentansprüche

1. Speichereinheit (1) für Trägersysteme, insbesondere Spannrahmenmodule (2) zur Bearbeitung von Fahrzeugkarosserien, aufweisend eine erste Speicherschiene (10) und eine zweite Speicherschiene (20) jeweils zur Aufnahme eines Trägersystems, wobei die erste und die zweite Speicherschiene (10, 20) parallel zu einer gemeinsamen Haupterstreckungsrichtung (100) angeordnet sind, **dadurch gekennzeichnet, dass** die erste und die zweite Speicherschiene (10, 20) entlang einer zur Haupterstreckungsrichtung (100) senkrechten Querrichtung (101) mittels eines gemeinsamen Motors (3) bewegbar sind.

2. Speichereinheit (1) nach Anspruch 1, wobei die Speichereinheit (1) eine mit dem Motor (3) wirkverbundene Getriebeeinheit (4) aufweist, wobei die erste Speicherschiene (10) über eine erste Zahnstange (11) mit der Getriebeeinheit (4) gekoppelt ist und wobei die zweite Speicherschiene (20) über eine zweite Zahnstange (21) mit der Getriebeeinheit (4) gekoppelt ist.

3. Speichereinheit (1) nach Anspruch 2, wobei die Getriebeeinheit (4) ein mit einer Antriebswelle (5) des Motors (3) drehfest verbundenes Antriebsritzel (6) umfasst, wobei das Antriebsritzel (6) sowohl in die erste Zahnstange (11), als auch in die zweite Zahnstange (21) formschlüssig eingreift.

4. Speichereinheit (1) nach einem der vorhergehenden Ansprüche, wobei die Speichereinheit (1) eine Zentralschiene (30) aufweist, welche entlang der Querrichtung (101) zwischen der ersten und der zweiten Speicherschiene (10, 20) angeordnet ist und welche parallel zur Haupterstreckungsrichtung (100) ausgerichtet ist.

5. Speichereinheit (1) nach Anspruch 4, wobei der Motor (3) und die Getriebeeinheit (4) an der Zentralschiene (30) befestigt sind, wobei sich die Antriebswelle (5) parallel zur Haupterstreckungsrichtung (100) erstreckt und wobei die erste und die zweite Zahnstange (11, 21) sich parallel zur Querrichtung (101) erstrecken.

6. Speichereinheit (1) nach einem der Ansprüche 4 oder 5, wobei die Speichereinheit (1) wenigstens zwei sich parallel zur Querrichtung (101) erstreckende Laufschienen (40, 41) umfasst, wobei die erste Speicherschiene (10), die zweite Speicherschiene (20) und die Zentralschiene (30) entlang der Querrichtung (101) beweglich auf den zwei Laufschienen (40, 41) gelagert sind.

7. Speichereinheit (1) nach einem der vorhergehenden Ansprüche, wobei die Speichereinheit (1) eine erste Fixiervorrichtung (12) zur lösbaren Fixierung der Position der ersten Speicherschiene (10) aufweist und/oder wobei die Speichereinheit (1) eine zweite Fixiervorrichtung (22) zur lösbaren Fixierung der Position der zweiten Speicherschiene (20) aufweist.

8. Speichereinheit (1) nach Anspruch 7, wobei die erste und/oder zweite Fixiervorrichtung (10, 20) ein Fixierelement zur lösbaren Fixierung der ersten und/oder zweiten Fixiervorrichtung (10, 20) gegenüber der ersten und/oder zweiten Laufschiene (40, 41) umfassen, wobei das Fixierelement vorzugsweise ein Spannhebelelement umfasst.

9. Speichereinheit (1) nach einem der vorhergehenden Ansprüche, wobei die Speichereinheit (1) eine Überführungsschiene (50) aufweist, welche parallel zur Haupterstreckungsrichtung (100) ausgerichtet ist, wobei wahlweise die erste Speicherschiene (10), die zweite Speicherschiene (20) und/oder die Zentralschiene (30) durch eine mittels des Motors (3) angetriebene Bewegung entlang der Querrichtung (101) in eine mit der Überführungsschiene (50) fluchtende Ausrichtung bringbar ist.

10. Speichereinheit (1) nach Anspruch 9, wobei die erste Speicherschiene (10), die zweite Speicherschiene (20) und/oder die Zentralschiene (30) jeweils an einer Stirnseite ein Führungsmittel (60) aufweist, wobei die Überführungsschiene (50) an einer korrespondierenden Stirnseite ein entsprechendes Gegenführungsmittel (61) aufweist, wobei das Führungsmittel (60) Rollen (62) und das Gegenführungsmittel (61) ein entlang der Querrichtung (101) zwischen die Rollen (62) einführbares Führungselement (63) aufweist oder wobei das Gegenführungsmittel (61) Rollen (62) und das Führungsmittel (61) ein entlang der Querrichtung (101) zwischen die Rollen (62) einführbares Führungselement (63) aufweist.

## Claims

1. Storage unit (1) for carrier systems, in particular clamping-frame modules (2) for the processing of vehicle bodies, comprising a first storage rail (10) and a second storage rail (20), each for accommodating a carrier system, wherein the first and the second storage rails (10, 20) are arranged parallel to a joint main-extent direction (100), **characterized in that** the first and the second storage rails (10, 20) can be moved, by means of a joint motor (3), along a transverse direction (101), which is perpendicular to the main-extent direction (100).

2. Storage unit (1) as claimed in Claim 1, wherein the storage unit (1) comprises a gear-mechanism unit (4), which is operatively connected to the motor (3), wherein the first storage rail (10) is coupled to the gear-mechanism unit (4) via a first rack (11), and wherein the second storage rail (20) is coupled to the gear-mechanism unit (4) via a second rack (21).

3. Storage unit (1) according to Claim 2, wherein the gear-mechanism unit (4) comprises a drive pinion (6), which is connected in a rotationally fixed manner to a drive shaft (5) of the motor (3), wherein the drive pinion (6) engages in a form-fitting manner both in the first rack (11) and in the second rack (21).

4. Storage unit (1) according to one of the preceding claims, wherein the storage unit (1) has a central rail (30), which is arranged, along the transverse direction (101), between the first and the second storage rails (10, 20) and is oriented parallel to the main-extent direction (100).

5. Storage unit (1) according to Claim 4, wherein the motor (3) and the gear-mechanism unit (4) are fastened on the central rail (30), wherein the drive shaft (5) extends parallel to the main-extent direction (100), and wherein the first and the second racks (11, 21) extend parallel to the transverse direction (101).

6. Storage unit (1) according to either of Claims 4 and 5, wherein the storage unit (1) comprises at least two running rails (40, 41) extending parallel to the transverse direction (101), wherein the first storage rail (10), the second storage rail (20) and the central rail (30) are mounted on the two running rails (40, 41) for movement along the transverse direction (101).

7. Storage unit (1) according to one of the preceding claims, wherein the storage unit (1) comprises a first fixing device (12) for releasably fixing the position of the first storage rail (10), and/or wherein the storage unit (1) comprises a second fixing device (22) for releasably fixing the position of the second storage rail (20).

8. Storage unit (1) according to Claim 7, wherein the first and/or second fixing devices (10, 20) comprise a fixing element for releasably fixing the first and/or second fixing device (10, 20) in relation to the first and/or second running rail (40, 41), wherein the fixing element preferably comprises a tensioning-lever element.

9. Storage unit (1) according to one of the preceding claims, wherein the storage unit (1) comprises a transfer rail (50), which is oriented parallel to the main-extent direction (100), wherein optionally the first storage rail (10), the second storage rail (20) and/or the central rail (30) can be brought into alignment with the transfer rail (50) by being driven by means of the motor (3) along the transverse direction (101).

10. Storage unit (1) according to Claim 9, wherein the first storage rail (10), the second storage rail (20) and/or the central rail (30) each comprise a guide means (60) on an end side, wherein the transfer rail (50) comprises a corresponding mating guide means (61) on a corresponding end side, wherein the guide means (60) comprises rollers (62) and the mating guide means (61) comprises a guide element (63), which can be introduced between the rollers (62) along the transverse direction (101), or wherein the mating guide means (61) comprises rollers (62) and the guide means (61) comprises a guide element (63), which can be introduced between the rollers (62) along the transverse direction (101).

## Revendications

1. Unité de stockage (1) pour des systèmes de transport, en particulier des modules de cadre de serrage (2) pour l'usinage de carrosseries de véhicules, présentant un premier rail de stockage (10) et un second rail de stockage (20) destinés respectivement à recevoir un système de transport, dans laquelle le premier et le second rails de stockage (10, 20) sont disposés parallèlement à une direction d'extension principale commune (100), **caractérisée en ce que** le premier et le second rails de stockage (10, 20) sont déplaçables le long d'une direction transversale (101) perpendiculaire à la direction d'extension principale (100) au moyen d'un moteur commun (3).

2. Unité de stockage (1) selon la revendication 1, dans laquelle l'unité de stockage (1) présente une unité de transmission (4) en liaison active avec le moteur (3), dans laquelle le premier rail de stockage (10) est couplé à l'unité de transmission (4) au moyen d'une première crémaillère (11) et dans laquelle le second rail de stockage (20) est couplé à l'unité de transmission (4) au moyen d'une seconde crémaillère (21) .

3. Unité de stockage (1) selon la revendication 2, dans laquelle l'unité de transmission (4) comprend un pignon d'entraînement (6) calé en rotation sur un arbre d'entraînement (5) du moteur (3), dans laquelle le pignon d'entraînement (6) engrène par emboîtement aussi bien avec la première crémaillère (11) qu'avec la seconde crémaillère (21).

4. Unité de stockage (1) selon l'une quelconque des revendications précédentes, dans laquelle l'unité de stockage (1) présente un rail central (30), qui est disposé le long de la direction transversale (101) entre le premier et le second rails de stockage (10, 20) et qui est orienté parallèlement à la direction d'extension principale (100).

5. Unité de stockage (1) selon la revendication 4, dans laquelle le moteur (3) et l'unité de transmission (4) sont fixés au rail central (30), dans laquelle l'arbre d'entraînement (5) s'étend parallèlement à la direction d'extension principale (100) et dans laquelle la première et la seconde crémaillères (11, 21) s'étendent parallèlement à la direction transversale (101) .

6. Unité de stockage (1) selon une des revendications 4 ou 5, dans laquelle l'unité de stockage (1) comprend au moins deux rails de roulement (40, 41) s'étendant parallèlement à la direction transversale (101), dans laquelle le premier rail de stockage (10), le second rail de stockage (20) et le rail central (30) sont montés de façon déplaçable sur les deux rails de roulement (40, 41) le long de la direction transversale (101) .

7. Unité de stockage (1) selon l'une quelconque des revendications précédentes, dans laquelle l'unité de stockage (1) présente un premier dispositif de fixation (12) pour la fixation détachable de la position du premier rail de stockage (10) et/ou dans laquelle l'unité de stockage (1) présente un second dispositif de fixation (22) pour la fixation détachable de la position du second rail de stockage (20).

8. Unité de stockage (1) selon la revendication 7, dans laquelle le premier et/ou le second dispositif (s) de fixation (10, 20) comprend/comprennent un élément de fixation pour la fixation détachable du premier et/ou du second dispositif(s) de fixation (10, 20) par rapport au premier et/ou au second rail(s) de roulement (40, 41), dans laquelle l'élément de fixation comprend de préférence un élément de levier de serrage.

9. Unité de stockage (1) selon l'une quelconque des revendications précédentes, dans laquelle l'unité de stockage (1) présente un rail de transfert (50), qui est orienté parallèlement à la direction d'extension principale (100), dans laquelle au choix le premier rail de stockage (10), le second rail de stockage (20) et/ou le rail central (30) peut/peuvent être amené(s) dans une orientation alignée avec le rail de transfert (50) par un mouvement le long de la direction transversale (101) entraîné au moyen du moteur (3).

10. Unité de stockage (1) selon la revendication 9, dans laquelle le premier rail de stockage (10), le second rail de stockage (20) et/ou le rail central (30) présente(nt) respectivement un moyen de guidage (60) sur un côté frontal, dans laquelle le rail de transfert (50) présente sur un côté frontal correspondant un moyen de guidage opposé correspondant (61), dans lequel le moyen de guidage (60) présente des galets (62) et le moyen de guidage opposé (61) présente un élément de guidage (63) insérable entre les galets (62) le long de la direction transversale (101) ou dans laquelle le moyen de guidage opposé (61) présente des galets (62) et le moyen de guidage (61) présente un élément de guidage (63) insérable entre les galets (62) le long de la direction transversale (101).
